# EUROPÄISCHE PATENTSCHRIFT

(11) **EP 2 706 192 B1**
(45) Veröffentlichungstag und Bekanntmachung des Hinweises auf die Patenterteilung: **27.06.2018**
(21) Anmeldenummer: 12006394.6
(22) Anmeldetag: 11.09.2012
(51) Int. Cl.: E21D 11/10, E02B 9/06, E21D 11/08

(54) **Verfahren zum Aufbau eines Druckstollens in Tübbingbauweise für den Wasserkraftwerksbau**
Method for creating a pressure tunnel in segment-based construction for hydro-electric plant construction
Procédé de création d'une galerie d'amenée dans une construction en cuvelage pour la construction de centrales hydro-électriques

(43) Veröffentlichungstag der Anmeldung: 12.03.2014
(73) Patentinhaber: TPH Bausysteme GmbH, 22848 Norderstedt (DE)
(72) Erfinder: Tintelnot, Götz, 22587 Blankenese (DE); Neumüller, Walter, 2371 Giesshübel (AT)
(74) Vertreter: Uexküll & Stolberg

(56) Entgegenhaltungen:
- EP-A1- 1 514 998
- DE-A1- 1 534 667
- DE-A1- 3 643 675
- DE-B- 1 238 945

## Beschreibung

Die vorliegende Erfindung betrifft ein Verfahren zum Aufbau eines Druckstollens in Tübbingbauweise für den Wasserkraftwerksbau, bei dem Tübbingbauteile in einem maschinell erstellen Hohlraum zusammengesetzt werden, um eine geschlossene Tunnelwand zu bilden, und der Zwischenraum zwischen der Innenwand des Hohlraums und der Außenwand der Tübbingbauteile mit Perlkies und Mörtel aufgefüllt wird.

Ein Wasserkraftwerk weist grundsätzlich drei Anlageteile auf: eine Wasserfassung bzw. einen Speicher, einen Triebwasserweg beispielsweise in einem Druckstollen und ein Krafthaus mit Unterwasserableitung.

Durch die Schwankungen des Wasserspiegels im Speicher muss die Entnahmestelle im Speicher unterhalb des Absenkzielniveaus angeordnet sein. Die Triebwasserleitung steht demnach unter dem Druck des jeweiligen Wasserspiegels im Speicher. Der maximalen statischen Innendruckbelastung des Druckstollens, entsprechend dem Stauziel, überlagert sich noch eine dynamische Druckbelastung, die sich aus dem höchsten Schwallspiegel im Wasserschloss und einem Druckstoßanteil ergibt. Eine ausführliche Darstellung des Aufbaus derartiger Druckstollen findet sich in dem Buch "Druckstollen und Druckschächte" von Gerhard Seeber, ENKE im Georg Thieme Verlag, 1999.

Aufgrund der im Wasserkraftwerksbau auftretenden hohen Innendrücke und der starken Druckschwankungen werden die wasserdurchlässigen, einschaligen Innenschalen bei mit Tunnelbohrmaschinen aufgefahrenen Druckstollen mittels Ringraumverfüllung und vorgespannter Druckverfüllung des Gebirges stabilisiert.

Das Dokument DE1238945B beschreibt ein Verfahren zum Aufbau eines Druckstollens in Tübbingbauweise für den Wasserkraftwerksbau, bei dem Tübbingbauteile in einem gebohrten Hohlraum zusammengesetzt werden, um eine geschlossene Tunnelwand zu bilden. Bevor der Zwischenraum zwischen der Innenwand des Hohlraums und der Außenwand der Tübbingbauteile mit Verpressmörtel aufgefüllt wird, werden Dichtungsbahnen auf die Außenwand der Tübbingbauteile aufbebracht, um deren Fugen abzudichten.

Es ist Aufgabe der vorliegenden Erfindung, ein Verfahren zum Aufbau eines Druckstollens anzugeben, mit dem mittels einer Tunnelbohrmaschine aufgefahrene Druckstollen für den Wasserkraftwerksbau einschalig aufgebaut werden und sowohl gedichtet, als auch vorgespannt und verfüllt wie auch nachher nachgespannt werden können.

Zur Lösung dieser Aufgabe dienen die kennzeichnenden Merkmale des Verfahrens nach Patentanspruch 1 in Verbindung mit dessen Oberbegriff. Vorteilhafte Ausführungsformen der Erfindung sind in den Unteransprüchen aufgeführt.

Erfindungsgemäß ist vorgesehen, dass der Ringspalt zwischen dem im Gebirge erstellten Hohlraum und den Tübbingbauteilen mit Mehrkorn-Perlkies aufgefüllt wird. Nach Auffüllen des Zwischenraums mit Mehrkorn-Perlkies wird quellfähiger und im ausgehärteten Zustand wasserdichter Verpressmörtel unter Druck in den Zwischenraum eingepresst, um eine Vorspannung der Tübbingbauteile nach innen zu erzeugen. Dadurch soll eine Vorspannung der Tübbingbauteile und des Gebirges erzeugt werden und sollen gleichzeitig die Auflockerungszonen des umgebenen Gebirges aufgefüllt werden. Der Verpressvorgang wird wie üblich mit Überdruck je nach den statischen Erfordernissen durchgeführt. Durch den Quellvorgang des Verpressmörtels beim Aushärten werden Schwindmaß und Kriechmaß der Tübbingbauteile kompensiert; ferner kann bei der ersten Befüllung des Druckstollens mit kaltem Wasser ebenfalls eine Größenreduzierung der Tübbingbauteile auftreten, die ebenfalls durch den Quellvorgang beim Aushärten des Verpressmörtels kompensiert werden soll.

Die Dichtwirkung des ausgehärteten Verpressmörtels verhindert gleichzeitig das Ein- und Austreten bzw. die Zirkulation von Wasser.

Zum Nachdichten und Nachspannen wird aushärtendes Injektionsmittel, vorzugsweise Silikatharz, in Zwischenräume zwischen den Außenwände der Tübbingbauteil und diese abdeckende Folien eingespritzt, wobei die Folien an ihren Rändern dicht mit der Außenwand der Tübbingbauteile verbunden sind, so dass sie sich durch das eingespritzte Injektionsmittel nach außen aufwölben.

Dieses Nachdichten soll eine nachträgliche erneute Erhöhung der Vorspannung der Tübbingbauteile nach innen bewirken, falls die durch die Quellung des Verpressmörtels bewirkte Vorspannung nachgelassen hat. Dieses Nachdichten kann bereits kurze Zeit nach dem Quellen des Verpressmörtels durchgeführt werden.

Alternativ kann zunächst nach dem Quellen des Verpressmörtels und die dadurch bewirkte Vorspannung der Tübbingbauteile nach innen diese Vorspannung ermittelt werden, indem die resultierende Verformung der Tübbingbauteile durch Abtastung der Innenwände der Tübbingbauteile erfasst wird. Wenn zu einem späteren Zeitpunkt, der auch einen längeren Zeitraum von Monaten oder Jahren umfassen kann, die Vorspannung der Tübbingbauteile nach innen erneut durch Bestimmung der Deformation durch Abtasten der Innenwände der Tübbingbauteile ermittelt wird und festgestellt wird, dass die Vorspannung nachgelassen hat, so kann auch erst zu diesem späteren Zeitpunkt das Nachdichten durch Einspressen des Injektionsmaterials in die Zwischenräume zwischen den Außenwänden der Tübbingbauteile und diese abdeckende Folien erfolgen.

Das Einspritzen des Injektionsmaterials in die Zwischenräume zwischen den Außenwänden der Tübbingbauteile und den Folien kann mit so hohem Druck erfolgen oder die Folien oder deren Befestigung an den Außenwänden der Tübbingbauteile kann mit Sollbruch- oder Schwächungsstellen versehen sein, so dass die Folien beim Einspritzen des Injektionsmaterials aufreißen, wodurch das Injektionsmaterial zusätzlich in etwaige entstandene Hohlräume außerhalb des Tübbingbauteils eindringt.

Es kann auch vorgesehen sein, dass nach dem Einspressen von quellfähigem und im ausgehärteten Zustand wasserdichtem Verpressmörtel und dessen Aushärtung eine weitere Einspressung von quellfähigen und ausgehärteten Zustand wasserdichten Verpressmörtel oder Silikatharz unter hohem Druck vorgenommen werden, so dass nach dem Quellen des zuerst eingepressten Verpressmörtels etwa entstandene Auslockerungszonen des umgebenden Gebirges oder Hohlräume verfüllt werden.

Die Verwendung von Mehrkorn-Perlkies erlaubt eine dichtere Auffüllung des Zwischenraums als Perlkies mit einfacher Korngröße, wodurch weniger Verpressmörtel benötigt wird. Insbesondere ist die Verwendung von Zweikorn-Perlkies bevorzugt, z.B. mit einer Korngröße aus dem Bereich 2 bis 4 mm und einer Korngröße aus dem Bereich 6 bis 8 mm, zum Beispiel zwei Korngrößen von 3 mm und 7 mm.

Die Verwendung von Mehrkorn-Perlkiesen mit zu vielen Korngrößen oder sogar mit einer einheitlichen Korngrößenverteilung zum Beispiel im Bereich von 2 bis 8 mm ist nicht bevorzugt, da dann eine so dichte Packung des Mehrkorn-Perlkieses erfolgt, dass nur noch wenig Volumen für den Verpressmörtel verbleibt; damit wäre dessen Funktion als quellfähiges Material und als Dichtungsmaterial eingeschränkt.

In einer bevorzugten Ausführungsform wird als quellfähiger und im ausgehärteten Zustand wasserdichter Verpressmörtel ein Verpressmörtel mit einem Quellmaß von 0,5 bis 1% Volumenvergrößerung verwendet.

Die Folie wird im Nachgang zur Produktion der Tübbingbauteile, aber vor deren Einbau im Stollen aufgebracht. Der Haftverbund zwischen Folien und Außenseite des Tübbingbauteils muss lediglich für die Bauphase einen Flüssigkeitseintrag unter die Folie verhindern. Der Verbund der Folie an den Rändern mit der Außenseite des Tübbingbauteils muss keinen hohen Belastungen standhalten, sondern kann sogar wie erwähnt ein Aufreißen erlauben. Das Tübbingbauteil kann eine vorgegebene Anzahl, beispielsweise zwei, konische Durchdringungen (Eingriffsöffnungen) im Tübbingbauteil aufweisen, deren Durchmesser sich von der Innenwand des Tübbingbauteils zur Außenwand hin vergrößert. Durch einige dieser Durchdringungen wird das aushärtende Injektionsmaterial in den Zwischenraum zwischen Außenseite des Tübbingbauteils und Folien eingepresst. Durch die konische Formgebung bleibt die Durchdringung nach Auffüllung mit dem aushärtenden Injektionsmaterial nach dessen Aushärtung dicht verschlossen. Andere Durchdringungen dienen zunächst zu der Beschickung des Ringspaltes zwischen der Innenwand des Hohlraums (Gebirge) und der Außenwand der Tübbingbauteile mit Mehrkorn-Perlkies und Verpressmörtel, der beim Aushärten aufquillt und so eine passive Vorspannung der Tübbingauskleidung bewirkt. Die passive Vorspannung verhindert ein Öffnen und Schließen der axialen Fugen zwischen den Tübbingbauteilen infolge von wechselnden Druckbelastungen.

Die Erfindung wird im Folgenden anhand eines Ausführungsbeispiels in den Figuren beschrieben, in denen:
Fig. 1 eine Schnittansicht eines nach einem erfindungsgemäßen Verfahren aufgebauten Druckstollens zeigt,
Fig. 2 bis 6 Detailansichten eines Schnitts durch einen Druckstollen in aufeinanderfolgenden Phasen bei der Ausführung eines erfindungsgemäßen Verfahrens zeigen, und
Fig. 7 bis 12 Ansichten im Längsschnitt eines Druckstollens in aufeinanderfolgenden Phasen bei der Durchführung eines erfindungsgemäßen Verfahrens zeigen.

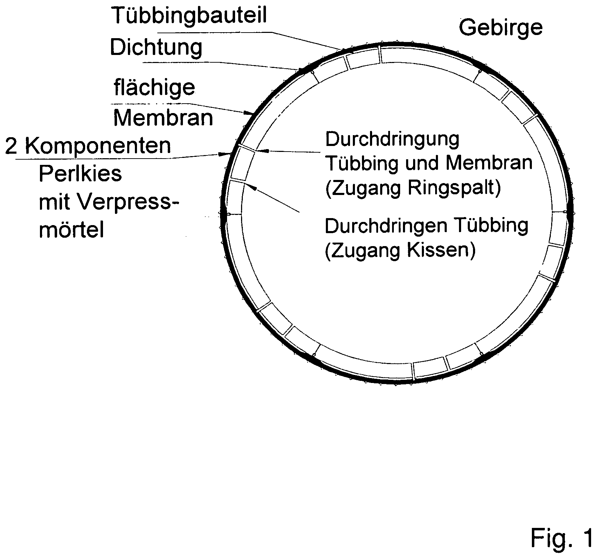

Fig. 1 gibt einen Überblick über einen nach einem erfindungsgemäßen Verfahren aufgebauten Druckstollen. Der Druckstollen weist Betonfertigteile (Tübbingbauteile) auf. Ferner ist zwischen den Tübbingsegmenten eine Dichtung aus Ethylen-Propylen-Dien-Kautschuk (EPDM) vorgesehen. Außen ist an dem Tübbing eine flächige Folie aus PVC oder thermoplastischem Polyolefin vorgesehen, die auf der Außenseite des Tübbingbauteils verlegt ist. Die Folienstücke sind lose verlegt und nur an den Rändern des Tübbingbauteils umlaufend verklebt. In dem Tübbingbauteil ist eine Durchdringung vorgesehen, durch die man Zugang zu dem Zwischenraum zwischen der Außenseite des Tübbingbauteils und der Folie erhält. Ferner ist in dem Tübbingbauteil eine Durchdringung vorgesehen, durch die Zugang zu dem Ringspalt zwischen der Außenseite der Folie und der Innenwand der Hohlraumbohrung gegeben ist.

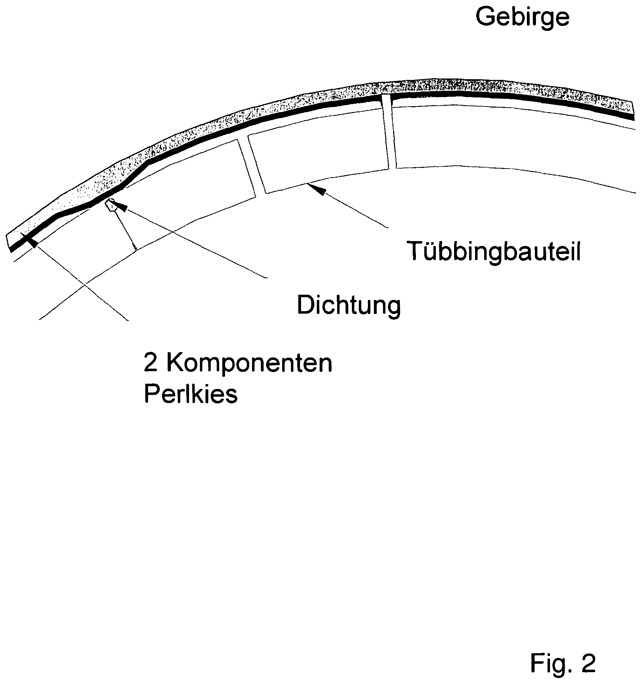

Fig. 2 zeigt eine Detailansicht des Druckstollens in einer frühen Phase des Aufbaus. Nach Einbau Tübbingbauteile in eine Stollenbohrung wird der ringförmige Zwischenraum oder Ringspalt zwischen der Außenfläche der Tübbingbauteile und dem umgebenden Gestein mit Mehrkorn-Perlkies aufgefüllt. Dadurch wird eine erste flächige Bettung der Tübbingbauteile hergestellt. Ein weiterer mit der Auffüllung mit Mehrkorn-Perlkies einhergehender Vorteil besteht darin, dass dadurch das später noch mit Verpressmörtel aufzufüllende Volumen wesentlich verkleinert wird.

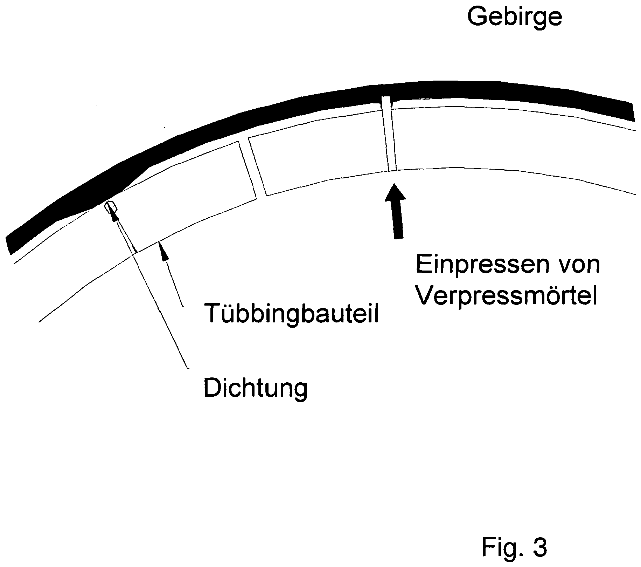

Fig. 3 zeigt den nächsten Schritt, in dem der mit Mehrkorn-Perlkies gefüllte Ringspalt mit quellfähigem Verpressmörtel aufgefüllt und verpresst wird.

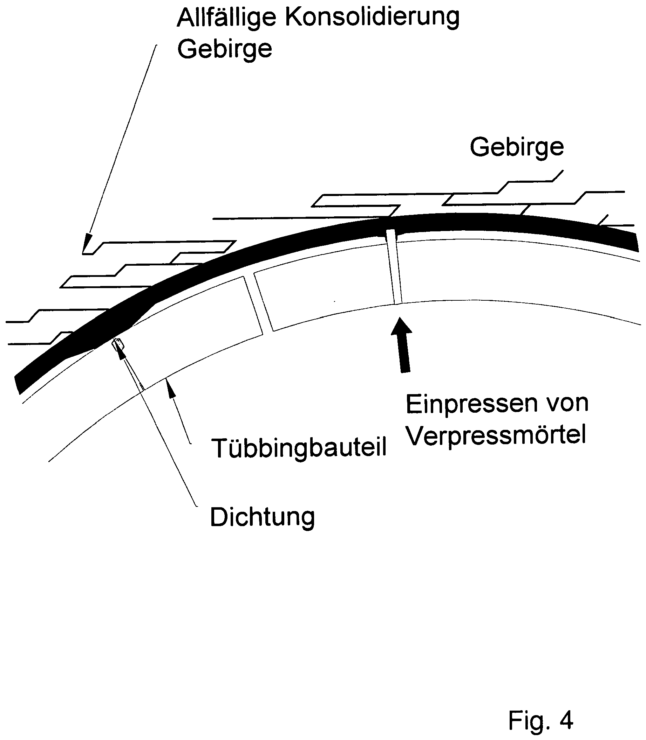

Fig. 4 zeigt den Zustand nach einer Einpressung von Verpressmörtel in den Außenraum der Tübbingbauteile zur Konsolidierung. Diese Verpressung mit Verpressmörtel erfolgt mit hohem Flächendruck (10 bis 15 bar). Hierdurch werden der Ringspalt und die Auslockerungszone des umgebenden Gesteins derart verfüllt, dass eine Vergütung des Gebirges erzeugt wird. Durch das Einspressen des Verpressmörtels unter Druck und das anschließende Aufquellen des Verpressmörtels beim Aushärten wird ein erhöhter Druck im Ringspalt und eine Vorspannung auf die Tübbingbauteile nach innen erzeugt, wodurch die Tübbingbauteile beginnen, sich zu verformen. Durch eine abtastende Vermessung der genauen Positionen der Innenfläche der Tübbingbauteile kann diese Verformung erfasst werden, wodurch sich der eingebrachte Druck und der Grad der Vorspannung ermitteln lassen.

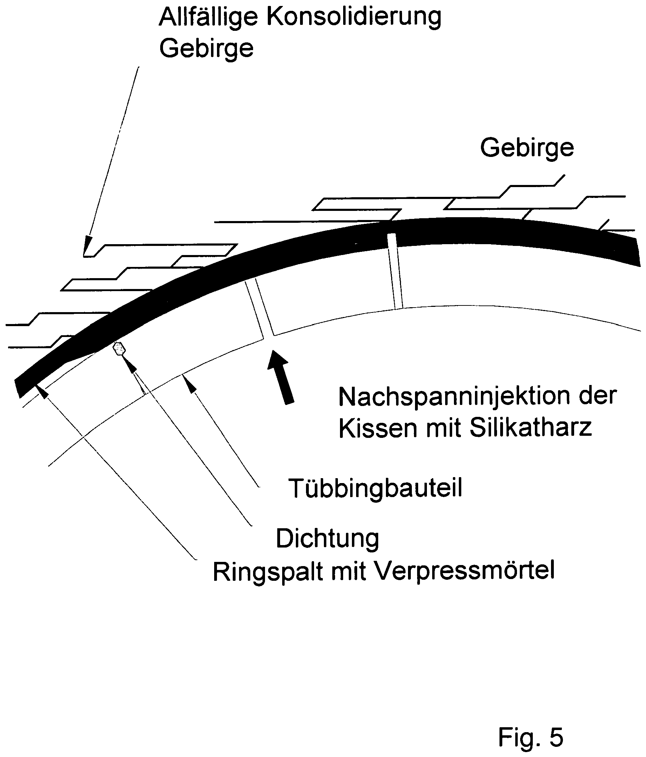

Fig. 5 zeigt den Zustand des Druckstollens im nächsten Verfahrensschritt. Aufgrund von Kriechen oder Relaxation des Gebirges und Kriechen oder Schwinden des Verpressmörtels oder der Tübbingbauteile kann es notwendig sein, einen weiteren Injektionsschritt durchzuführen. Hierzu werden Folienkissen (Zwischenraum zwischen der Außenfläche des Tübbingbauteils und darauf aufgelegten Folien, die an ihren Rändern mit der Außenfläche des Tübbingbauteils verbunden ist) mit einem aushärtenden Injektionsmittel unter hohem Druck (bis 20 bar) verpresst, wobei als Injektionsmittel vorzugsweise Silikatharz verwendet wird. Es ist auch bevorzugt, dass die Folienkissen aufgrund des hohen Drucks oder durch vorab hergestellte Schwächungszonen oder Sollbruchstellen am Ende der Injektion aufreißen, so dass das Injektionsmittel in etwa noch bestehende oder neu entstandene Hohlräume außerhalb der Folienkissen eindringen und diese verfüllen können.

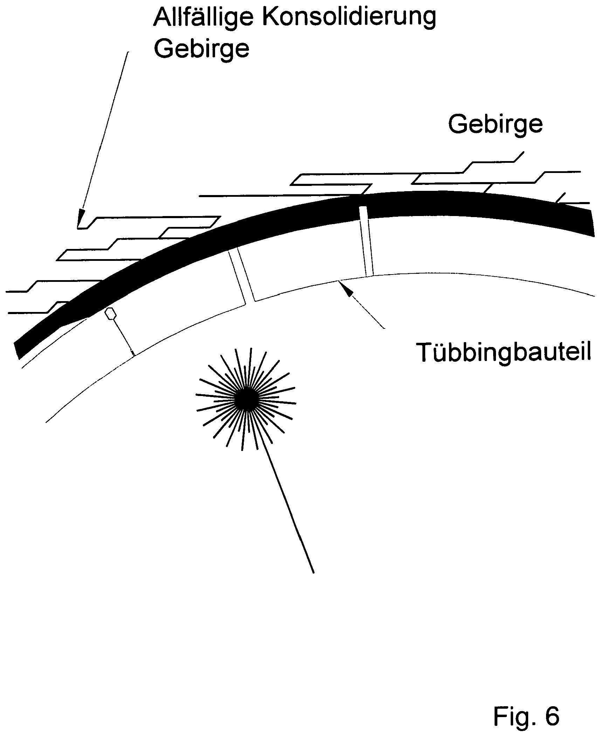

Fig. 6 illustriert die Erfolgskontrolle durch erneute Messung der Deformation der Tübbingbauteile. Diese Erfolgskontrolle erfolgt wiederum durch Abtasten der Innenwände der Tübbingbauteile mittels eines Flächenscanners, wodurch die Verformung der Tübbingbauteile und damit der Grad der Vorspannung ermittelt werden kann. Grundsätzlich kann eine solche Erfolgskontrolle nach jedem Schritt der Injektionen durchgeführt werden, um die resultierenden Deformationen der Tübbingbauteile zu erfassen und aufzuzeichnen. Die hochauflösende Messung der Positionen der Innenwände der Tübbingbauteile und damit die Erfassung der Deformationen stellt den Erfolg sicher und ist gleichzeitig eine Sicherheitskontrolle vor dem Versagen der Tübbingbauteile durch zu hohen Außendruck.

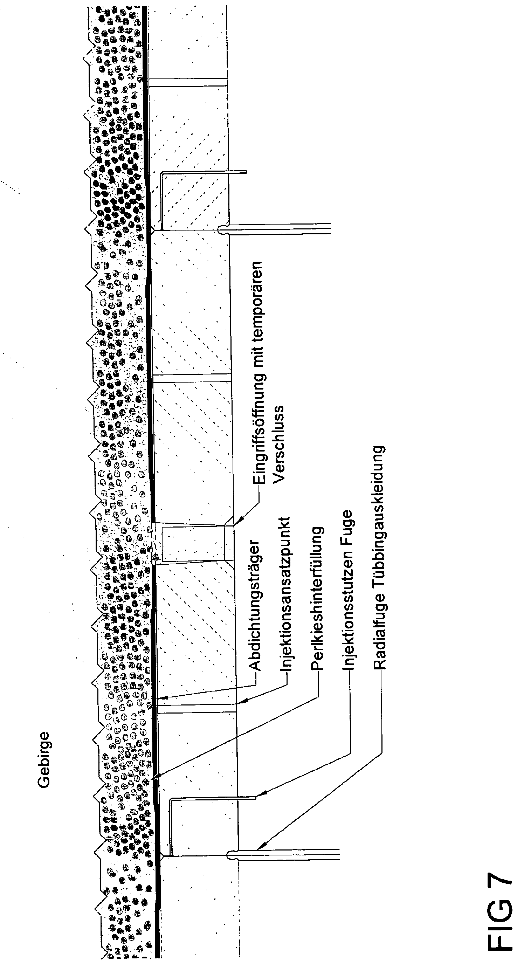

Die Fig. 7 bis 12 zeigen aufeinanderfolgende Phasen bei der Durchführung eines erfindungsgemäßen Verfahrens im Längsschnitt durch den Druckstollen.

In Fig. 7 wird der Ringspalt mit Mehrkorn-Perlkies gefüllt.

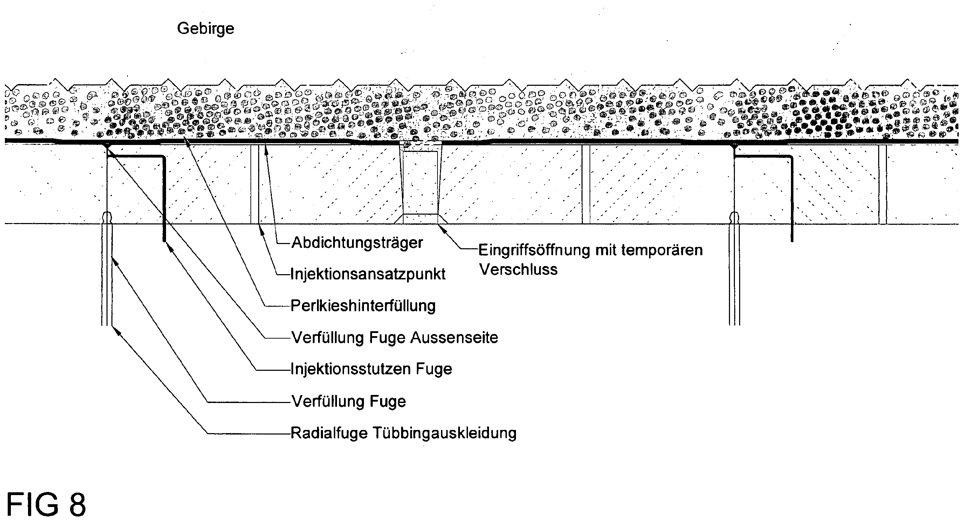

In Fig. 8 wird die Radialfuge zwischen aufeinanderfolgenden Tübbingen an der Außenseite und an der Innenseite verfüllt.

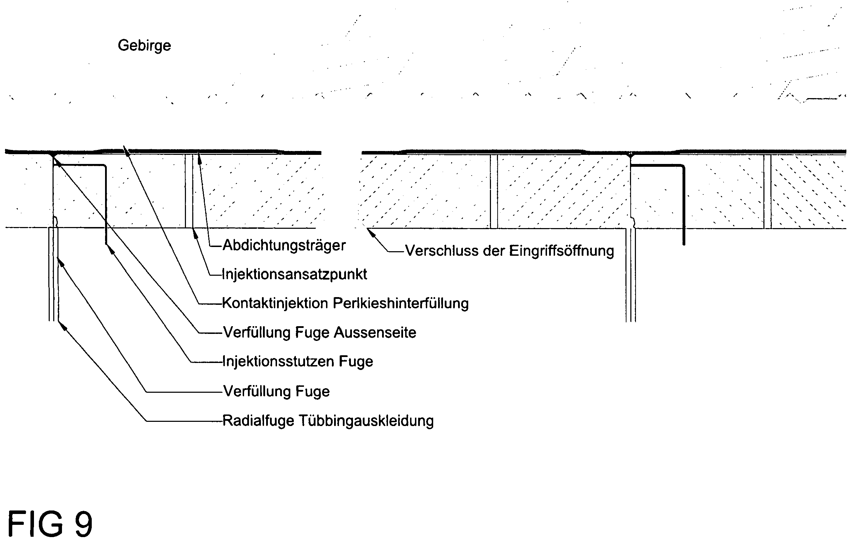

In Fig. 9 wird der mit Perlkies gefüllte Ringspalt weiter mit Silikatharz gefüllt

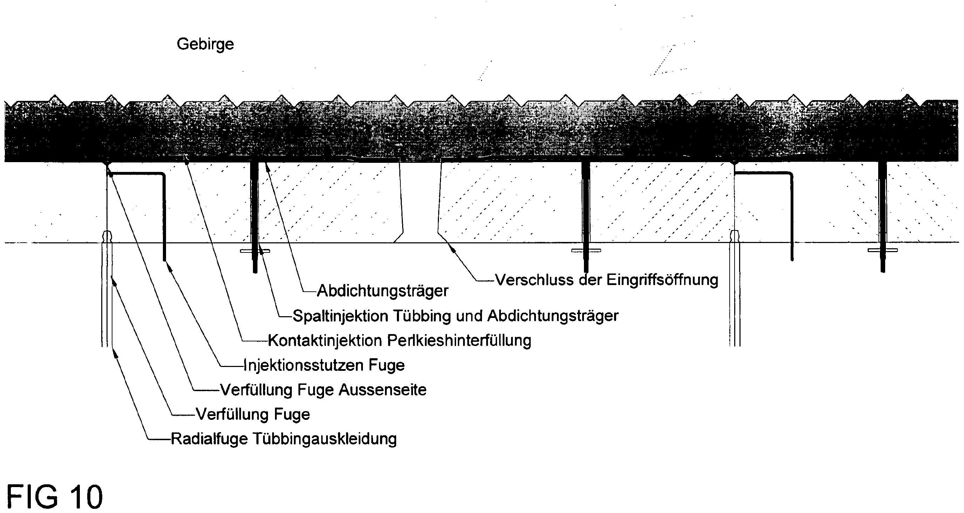

In Fig. 10 werden die Folienkissen an der Außenseite der Tübbingbauteile durch Injektion von Silikatharz gefüllt, um, wenn nötig, eine erhöhte Vorspannung auf die Tübbingbauteile nach Innen zu erzeugen.

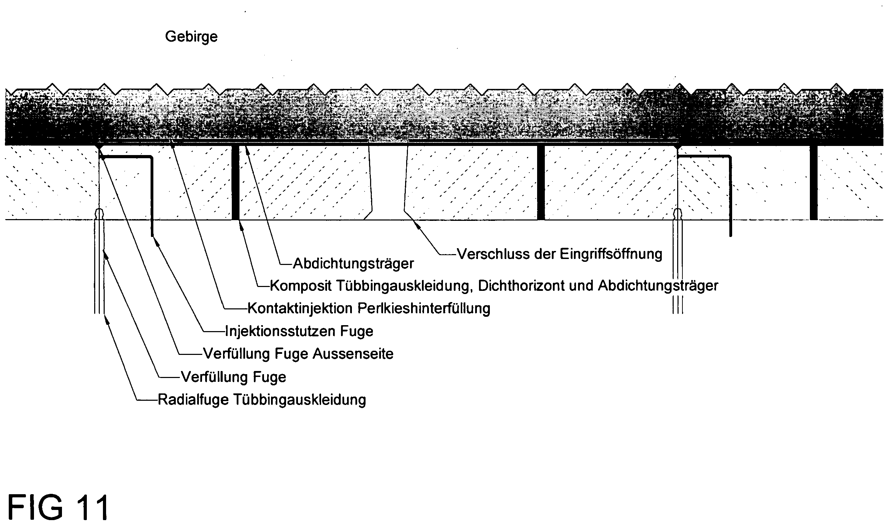

In Fig. 11 sind die Verpressungen abgeschlossen, wonach nach Erfolgskontrolle durch Abtasten der Innenwände der Tübbingbauteile mittels eines Flächenscanners und Erfassung der Verformung der Tübbingbauteile der Aufbau des Druckstollens abgeschlossen ist.

Im Folgenden werden die Materialien beschrieben, die bei der Ausführung der vorliegenden Erfindung verwendet werden können.

Es kann zum Beispiel ein 2-komponentiges, nichtschäumendes, leicht flexibilisiertes Injektionsharz auf Silikatbasis zur Injektion von wasserführenden Rissen sowie zur Boden- und Gesteinsverfestigung verwendet werden. Das Silikatharz wird durch Mischen von zwei Komponenten hergestellt, wobei diese Komponenten A und B eine Wasserglas-Komponente A und eine Isocyanate enthaltende Komponente B umfassen. Nach der homogenen Vermischung beider Komponenten entsteht eine viskose Emulsion, die kein weiteres Wasser aus dem Injektionsgebiet aufnimmt, sondern es aufgrund der hohen Dichte vor sich her schiebt. Das bevorzugte Silikatharz hat folgende technische Daten:

**Mischungsverhältnis A:B 1:1 Volumenteile**

| | |
|---|---|
| Verarbeitungszeit | ca. 60 Sekunden (abhängig von der Temperatur) |
| Endaushärtung | ca. 20 Minuten (abhängig von der Temperatur) |
| Druckfestigkeit | ca. 14 N/mm² (DIN 12190) |
| Spannungswert | ca. 150 MPa (DIN 53504) |
| Zugfestigkeit | ca. 2,0 MPa (DIN 53504) |
| Reissdehnung | ca. 1% (DIN 53504) |
| Verarbeitungstemperatur | 15 - 30°C (Bauteiltemperatur) |

Die beiden Komponenten werden im Mischungsverhältnis 1:1 (Volumenteile) mithilfe von Zweikomponenten-Injektionspumpen direkt aus den Behältern gefördert und durch einen Statikmischer homogen vermischt. Die anfangs flüssige Mischung erreicht schnell einen nicht mehr fliessfähigen Zustand und härtet dann rasch ohne Aufschäumen aus.

Als quellfähiger Verpressmörtel ist ein Quellmörtel auf Zementbasis verwendbar, der z.B. eine Körnung von 0 - 2 mm hat, nicht schrumpfend ist und eine hohe Früh- und sehr hohe Endfestigkeit hat. Dies entspricht einem Zement für Fugen nach DIN/EN 206-11045/2 Abschnitt 5.3.8. Ein solcher Quellmörtel wird unter der Bezeichnung F2700 von der TPH Bausysteme GmbH, Norderstedt, angeboten. F2700 ist chloridfrei, hat eine kontrollierte Voluminierung und schrumpft unter keinen Umständen. F2700 entspricht nach DIN 4102 der Bandschutzklasse A1. F2700 hat eine plastisch/thixotrope Konsistenz und ist auch bei grösseren Aufbauhöhen standfest. Ferner entwickelt F2700 hohe Festigkeiten. Schon etwa einen Tag nach dem Verfüllen kann der Mörtel belastet werden. Dieser Mörtel hat weiter folgende technische Eigenschaften:

| | | | |
|---|---|---|---|
| Verarbeitungstemperatur | 5 - 30°C | | |
| Wasserbedarf | ca. 4 bis 4,25 Liter Wasser pro 25 kg Mörtel | | |
| Mischzeit | ca. 2 bis 3 Min. | | |
| Verarbeitungszeit (20°C) ca. 45 Min. | | | |
| Verbrauch | 25 kg Trockenmörtel ergeben ca. 15 Liter Frischmörtel | | |
| Festmörteleigenschaften: | | | |
| | 1 Tag | 7 Tage | 28 Tage |
| Druckfestigkeit [N/mm²] | 19 | 35 | 42 |
| Biegezugfestigkeit [N/mm²] | 4,0 | 5,0 | 7,0 |

## Patentansprüche

1. Verfahren zum Aufbau eines Druckstollens in Tübbingbauweise für den Wasserkraftwerksbau, bei dem
Tübbingbauteile in einem maschinell erstellten Hohlraum zusammengesetzt werden, um eine geschlossene Tunnelwand zu bilden, und
der Zwischenraum zwischen der Innenwand des Hohlraums und der Außenwand der Tübbingbauteile mit Perlkies und Mörtel aufgefüllt wird,
**dadurch gekennzeichnet,**
**dass** beim Auffüllen des Zwischenraums als Perlkies ein Mehrkorn-Perlkies und als Mörtel ein quellfähiger und im ausgehärteten Zustand wasserdichter Verpressmörtel verwendet werden,
**dass** nach Auffüllen des Zwischenraums mit Mehrkorn-Perlkies der Verpressmörtel unter Druck eingepresst wird, um durch Quellen des Verpressmörtels beim Aushärten eine zusäztliche Vorspannung auf die Tübbingbauteile nach Innen zu erzeugen, und
**dass** zum Nachdichten ein aushärtendes Injektionsmittel in Zwischenräume zwischen den Außenwänden der Tübbingbauteile und diese abdeckende Folien eingespritzt wird, wobei die Folien an den Rändern dicht mit den Außenwänden der Tübbingbauteil verbunden sind, so dass sie sich durch das eingespritzte Injektionsmittel nach außen aufwölben.

2. Verfahren nach Anspruch 1, **dadurch gekennzeichnet, dass** nach dem Einpressen des quellfähigen und im ausgehärteten Zustand wasserdichten Verpressmörtels und nach Quellen und Aushärten des Verpressmörtels die erzeugte Vorspannung auf die Tübbingbauteile nach innen erfasst wird, indem die resultierende Verformung der Tübbingbauteile durch Abtastung der Innenwände der Tübbingbauteile erfasst wird, und dass zu einem späteren Zeitpunkt die Vorspannung der Tübbingbauteile nach innen erneut durch Erfassen der Deformation der Tübbingbauteile durch Abtasten der Innenwände erneut erfasst wird, und dass, soweit ein Nachlassen der Vorspannung der Tübbingbauteile nach innen festgestellt wird, das Nachdichten durch Einspritzen von aushärtendem Injektionsmittel in die Zwischenräume zwischen den Außenwänden der Tübbingbauteile und den diese abdeckende Folien erfolgt.

3. Verfahren nach einem der vorhergehenden Ansprüche, **dadurch gekennzeichnet, dass** das Injektionsmittel unter so hohem Druck in die Zwischenräume zwischen den Außenwänden der Tübbingbauteile und den Folien gespritzt wird und/oder dass die Folien oder ihre Befestigung an den Außenseiten der Tübbingbauteile mit Schwächungs- oder Sollbruchstellen versehen sind, so dass die Folien oder Verbindungsbereiche zu den Außenwänden der Tübbingbauteile aufreißen, so dass im Außenraum etwa noch vorhandene Hohlräume verfüllt werden.

4. Verfahren nach einem der vorhergehenden Ansprüche, **dadurch gekennzeichnet, dass** nach dem Einpressen von quellfähigen und im ausgehärteten Zustand wasserdichten Verpressmörtel und dessen Aushärtung noch vor dem Nachdichten durch Einspritzen von Injektionsmittel eine weitere Einpressung von quellfähigem und im ausgehärteten Zustand quellfähigen Verpressmörtel oder Silikatharz unter so hohem Druck vorgenommen wird, dass Auslockerungszonen des umgebenden Gebirges verfüllt werden.

5. Verfahren nach einem der vorhergehenden Ansprüche, **dadurch gekennzeichnet, dass** als Mehrkorn-Perlkies ein Zweikorn-Perlkies verwendet wird.

6. Verfahren nach einem der vorhergehenden Ansprüche, **dadurch gekennzeichnet, dass** als aushärtendes Injektionsmittel Silikatharz verwendet wird.

7. Verfahren nach einem der vorhergehenden Ansprüche, **dadurch gekennzeichnet, dass** als quellfähiger und im ausgehärteten Zustand wasserdichter Verpressmörtel ein Verpressmörtel mit einem Quellmaß von 0,5 bis 1% Volumenvergrößerung verwendet wird.

## Claims

1. Method for constructing a pressure tunnel in tubing segment design for hydroelectric power plant building, in which method
tubing segments are assembled in a cavity created by machine in order to form a closed tunnel wall, and
the clearance between the inner wall of the cavity and the outer wall of the tubing segments is filled up by pea gravel and mortar,
**characterized**
**in that**, when filling up the clearance a multiple pea-size pea gravel is used as pea gravel, and that as mortar a swellable and, in the hardened state, watertight grouting mortar is used,
**in that** after filling the clearance with multiple pea-size pea gravel the grouting mortar is injected under pressure, in order to create, by the swelling of the grouting mortar upon hardening, additional inwardly directed preload on the tubing segments, and
**in that**, for resealing, a curable injection material is injected in gaps between the outer walls of the tubing segments and films covering these outer walls, wherein these films are connected at the edges with the outer walls of the tubing segment such that the films are bulging outwardly by the injected injection material.

2. Method according to claim 1, **characterized in that** after pressing in the swellable and in the cured state watertight grouting mortar and after swelling and hardening of the grouting mortar the preload created on the tubing segments in inward direction is determined by measuring the resulting deformation of the tubing segments by scanning the inner walls of the tubing segments, and that at a later stage the preload on the tubing segments in inward direction is determined again by scanning the inner walls, and that, in case a decrease of the preload on the tubing segments an inward direction is found, resealing is performed by injection of cureable injection material in the gaps between the outer walls of the tubing segments and the films covering the outer walls.

3. Method according to any of the preceding claims, **characterized in that** the injection material is injected into the gaps between the outer walls of the tubing segments and the films under such high pressures and/or that the films or their connection to the outer walls of the tubing segments are provided with weakened or predetermined breaking zones such that the films or the connection regions to the outer walls of the tubing segments rupture so that any possible remaining cavities in the exterior space are filled up.

4. Method according to any of the preceding claims, **characterized in that** after injection of the swellable and, in the hardened state, watertight grouting mortar and after its hardening and before resealing by injection of injection material a further injection of swellable and, in the hardened state, swellable grouting mortar or silicate resin under such high pressure is performed that damaged zones in the surrounding rock are filled.

5. Method according to any of the preceding claims, **characterized in that** as a multiple pea size pea gravel a pea gravel with two pea-sizes is used.

6. Method according to any of the preceding claims, **characterized in that** a silicate resin is used as curable injection material.

7. Method according to any of the preceding claims, **characterized in that** as swellable and in the hardened state watertight grouting mortar a grouting mortar having a degree of swelling of 0.5 to 1% increase in volume is used.

## Revendications

1. Procédé de création d'une galerie d'amenée dans une construction en cuvelage pour la construction de centrales hydro-électriques, dans lequel
des composants de cuvelage sont rassemblés dans une cavité établie par machine afin de former une paroi de tunnel fermée, et
l'espace intermédiaire entre la paroi intérieure de la cavité et la paroi extérieure des composants de cuvelage est rempli de gravillon et mortier,
**caractérisé en ce**
**que** lors du remplissage de l'espace intermédiaire un gravillon à plusieurs grains est utilisé en tant que gravillon et un mortier d'injection gonflable et étanche à l'eau dans l'état durci est utilisé en tant que mortier,
**qu'**après le remplissage de l'espace intermédiaire avec du gravillon à plusieurs grains le mortier d'injection est enfoncé sous pression afin de générer par gonflage du mortier d'injection lors du durcissement une précontrainte supplémentaire sur les composants de cuvelage vers l'intérieur, et
**que** pour le scellage un moyen d'injection durcissant est injecté dans des espaces intermédiaires ente les parois extérieures des composants de cuvelage et des films les recouvrant, dans lequel les films sont raccordés sur les bords de manière étanche avec les parois extérieures du composant de cuvelage de sorte qu'ils se bombent vers l'extérieur par le moyen d'injection injecté.

2. Procédé selon la revendication 1, **caractérisé en ce qu'**après l'enfoncement du mortier d'injection gonflable et étanche à l'eau dans l'état durci et après le gonflage et le durcissement du mortier d'injection la précontrainte générée sur les composants de cuvelage est détectée vers l'intérieur **en ce que** la déformation résultante des composants de cuvelage est détectée par balayage des parois intérieures des composants de cuvelage, et qu'à un moment ultérieur la précontrainte des composants de cuvelage est détectée vers l'intérieur de nouveau par détection de la déformation des composants de cuvelage par balayage des parois intérieures de nouveau, et que tant qu'un relâchement de la précontrainte des composants de cuvelage vers l'intérieur est constaté, le scellage est effectué par injection de moyen d'injection durcissant dans les espaces intermédiaires entre les parois extérieures des composants de cuvelage et les films les recouvrant.

3. Procédé selon l'une quelconque des revendications précédentes, **caractérisé en ce que** le moyen d'injection est injecté sous pression si élevée dans les espaces intermédiaires entre les parois extérieures des composants de cuvelage et les films et/ou que les films ou leur fixation sont pourvus sur les côtés extérieurs des composants de cuvelage de points d'affaiblissement ou de rupture de consigne de sorte que les films ou zones de raccordement aux parois extérieures des composants de cuvelage se rompent afin que des cavités à peu près encore présentes dans l'espace extérieur soient remplies.

4. Procédé selon l'une quelconque des revendications précédentes, **caractérisé en ce qu'**après l'enfoncement de mortier d'injection gonflable et étanche à l'eau dans l'état durci et son durcissement encore avant le scellage par injection de moyen d'injection un autre enfoncement de mortier d'injection gonflable et gonflable dans l'état durci ou résine de silicate est entrepris sous une pression si élevée que des zones d'ameublissement de la montagne environnante soient remplies.

5. Procédé selon l'une quelconque des revendications précédentes, **caractérisé en ce qu'**un gravillon à deux grains est utilisé en tant que gravillon à plusieurs grains.

6. Procédé selon l'une quelconque des revendications précédentes, **caractérisé en ce que** de la résine de silicate est utilisée en tant que moyen d'injection durcissant.

7. Procédé selon l'une quelconque des revendications précédentes, **caractérisé en ce qu'**un mortier d'injection avec un taux de gonflement de 0,5 à 1 % d'augmentation de volume est utilisé en tant que mortier d'injection gonflable et étanche à l'eau dans l'état durci.
